# DEMANDE DE BREVET EUROPEEN

(11) **EP 1 072 486 A1**
(43) Date de publication de la demande: **31.01.2001**
(21) Numéro de dépôt: 00402072.3
(22) Date de dépôt: 20.07.2000
(51) Int. Cl.: B60R 25/02

(54) **Arbre de direction de véhicule automobile équipé d'un manchon antivol débrayable**

(30) Priorité: 27.07.1999 FR 9909742
(71) Demandeur: ECIA INDUSTRIE, 92100 Boulogne (FR)
(72) Inventeur: Perrot, Gérard, 25700 Valentigney (FR)
(74) Mandataire: Habasque, Etienne Joel Jean-François

(57) **Abrégé**

Cet arbre de direction de véhicule automobile, sur lequel est monté un manchon antivol (3) débrayable sous effort, accouplé à cet arbre (1) par l'intermédiaire d'au moins une bague de friction (5,6), est caractérisé en ce que la bague (5,6) et/ou la surface de contact correspondante de l'arbre (1) et/ou du manchon (3) sont traitées par phosphatation.

## Description

La présente invention concerne un arbre de direction de véhicule automobile.

Plus particulièrement, l'invention se rapporte à un arbre de direction sur lequel est monté un manchon antivol débrayable sous effort, accouplé à cet arbre par l'intermédiaire d'au moins une bague de friction.

Ces dispositifs ont été développés dans l'état de la technique pour réduire les risques de dégradation de l'ensemble de colonne lors par exemple d'une tentative de vol du véhicule.

Cependant, la fabrication de tels arbres pose un certain nombre de problèmes.

En effet, le couple résistant à la rotation entre le manchon et l'arbre doit être compris entre deux valeurs limites, même après un cycle de test comprenant plusieurs déplacements forcés en rotation de l'arbre dans ce manchon.

Or, dans l'état de la technique, ce couple résistant diminue très fortement au fur et à mesure du déroulement du cycle de test et l'on conçoit que le couple résistant initial, c'est-à-dire avant le début du cycle de test, doit être extrêmement élevé.

Ceci se traduit alors par l'application de contraintes extrêmement importantes sur l'arbre de direction, notamment lors de l'emmanchement du manchon antivol et de la bague de friction sur l'arbre de direction et au cours du cycle de test.

Ces contraintes importantes peuvent entraîner des dégradations de l'arbre de direction.

De plus, elles nécessitent la mise en oeuvre de machines complexes, puissantes et coûteuses pour l'emmanchement du manchon sur l'arbre et le test de cet arbre.

Enfin, toutes ces opérations, notamment de test, prennent un temps relativement important, ce qui réduit les cadences de fabrication de ces arbres.

Le but de l'invention est donc de résoudre ces problèmes.

A cet effet, l'invention a pour objet un arbre de direction de véhicule automobile, sur lequel est monté un manchon antivol débrayable sous effort, accouplé à cet arbre par l'intermédiaire d'au moins une bague de friction, caractérisé en ce que la bague et/ou la surface de contact correspondante de l'arbre et/ou du manchon sont traitées par phosphatation.

Avantageusement, la phosphatation est une phosphatation fer-manganèse.

Avantageusement également, cette bague et/ou cette surface de contact sont recouvertes d'une couche de vernis de glissement.

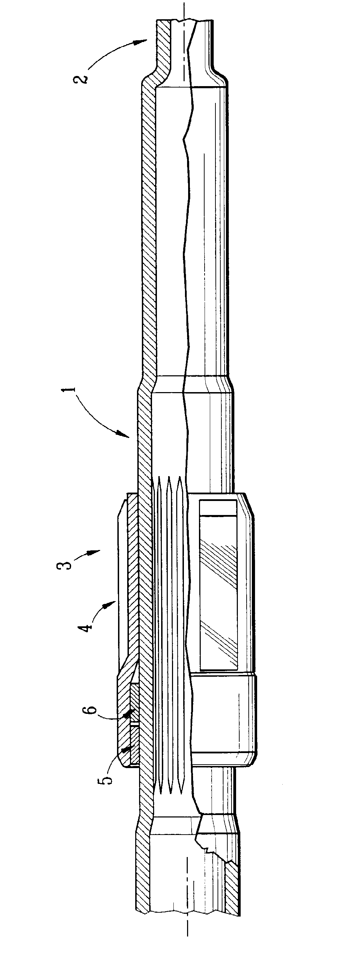

L'invention sera mieux comprise à la lecture de la description qui va suivre, donnée uniquement à titre d'exemple et faite en se référant au dessin annexé, qui représente une vue partiellement en coupe d'un arbre de direction selon l'invention équipé d'un manchon antivol.

On reconnaît en effet sur cette figure, un arbre de direction désigné par la référence générale 1, dont une extrémité désignée par la référence générale 2 est adaptée pour recevoir un volant de direction du véhicule.

L'autre extrémité de cet arbre, non représentée sur cette figure, est adaptée pour être reliée au reste du mécanisme de direction du véhicule.

Sur cet arbre est monté un manchon antivol débrayable sous effort, ce manchon antivol étant désigné par la référence générale 3.

Ce manchon comporte sur sa surface externe, des moyens 4 adaptés pour coopérer par exemple avec un pêne d'un mécanisme à serrure du véhicule.

Ces moyens 4 comprennent par exemple des cannelures.

Ce manchon 3 est accouplé à l'arbre 1 par l'intermédiaire d'au moins une bague de friction de façon classique.

Dans l'exemple de réalisation décrit sur cette figure, deux bagues de friction désignées par les références générales 5 et 6, sont disposées côte à côte pour accoupler le manchon à l'arbre.

Selon l'invention, la ou chaque bague de friction et/ou la surface de contact correspondante de l'arbre et/ou du manchon, sont traitées par phosphatation.

De préférence, cette phosphatation est une phosphatation fer-manganèse.

La ou chaque bague et/ou la surface de contact correspondante peuvent également être recouverte d'une couche de vernis de glissement, par exemple au bisulfure de molybdène.

Il a en effet été constaté lors d'essais, que cette structure de revêtement de ces pièces permettait d'obtenir un couple résistant relativement stable lors du cycle de test évoqué précédemment.

Le couple résistant initial, c'est-à-dire avant le début du cycle de test étant à peu près équivalent à celui obtenu en fin de cycle de test, les contraintes appliquées sur l'arbre de direction lors de l'emmanchement du manchon et lors de ce cycle de test sont alors réduites, ce qui permet d'éliminer tous risques de dégradation de l'arbre, de réduire la puissance des machines d'emmanchement et de test mises en oeuvre et d'accélérer les cadences de production.

Bien entendu, d'autres modes de réalisation encore d'un tel arbre peuvent être envisagés.

## Revendications

1. Arbre de direction de véhicule automobile, sur lequel est monté un manchon antivol (3) débrayable sous effort, accouplé à cet arbre (1) par l'intermédiaire d'au moins une bague de friction (5,6), caractérisé en ce que la bague (5,6) et/ou la surface de contact correspondante de l'arbre (1) et/ou du manchon (3) sont traitées par phosphatation.

2. Arbre selon la revendication 1, caractérisé en ce que la phosphatation est une phosphatation fer-manganèse.

3. Arbre selon la revendication 1 ou 2, caractérisé en ce que la bague (5,6) et/ou la surface de contact correspondante sont recouvertes d'une couche de vernis de glissement.

4. Arbre selon la revendication 3, caractérisé en ce que le vernis est un vernis au bisulfure de molybdène.
